(19) Europäisches Patentamt
European Patent Office
Office européen des brevets

(11) Numéro de publication: **0 043 320**
**B1**

(12) **FASCICULE DE BREVET EUROPEEN**

(45) Date de publication du fascicule du brevet: **23.10.85**

(51) Int. Cl.$^4$: **H 04 Q 1/457**

(21) Numéro de dépôt: **81401024.5**

(22) Date de dépôt: **25.06.81**

(54) **Récepteur numérique de fréquences.**

(30) Priorité: **25.06.80 FR 8014090**

(43) Date de publication de la demande:
**06.01.82 Bulletin 82/01**

(45) Mention de la délivrance du brevet:
**23.10.85 Bulletin 85/43**

(84) Etats contractants désignés:
**AT BE CH DE FR GB IT LI LU NL SE**

(56) Documents cités:
**FR-A-1 603 175**
**FR-A-2 269 261**
**FR-A-2 299 769**
**FR-A-2 374 808**

**COMMUTATION ET ELECTRONIQUE, no. 59, octobre 1977, Paris, FR, H. CAMPAGNO et al. "Système E10. L équipment de tonalités et auxiliaires", pages 99-115**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Delpit, Philippe**
**16, rue Chardon Lagache**
**F-75016 Paris (FR)**
Inventeur: **Duplessis, Philippe**
**14, avenue Adrienne**
**F-92700 Colombes (FR)**
Inventeur: **Renaudin, Yves**
**Bâtiment 7 La Montgolfière 15 Quai Boissy d'Anglas**
**F-78380 Bougival (FR)**

(74) Mandataire: **Weinmiller, Jürgen et al**
**Zeppelinstrasse 63**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 043 320 B1

**Description**

L'invention concerne un récepteur numérique de fréquences permettant notamment l'identification des signaux à fréquences vocales des codes de signalisation pour les télécommunications. Elle est utilisable en particulier dans les centraux téléphoniques à commutation temporelle, pour la réception de la signalisation entre centraux et de la signalisation émises par les postes à clavier des abonnés.

Dans les centraux téléphoniques temporels, les récepteurs numériques sont souvent reliés aux circuits et lignes par le réseau de connexion et par une liaison à multiplex temporel telle qu'une liaison MIC 32 voies aux normes européennes. Le récepteur analyse en temps partagé les signaux qu'il reçoit sur ces 32 voies et dialogue avec une logique de décision.

Un grand nombre de récepteurs connus sont basés sur la théorie des filtres linéaires, définis par des équations aux différences finies. Un récepteur de ce type est décrit dans le document FR—A—1.603.175. Un tel récepteur a l'inconvénient de nécessiter un filtre passe-bande par fréquence à reconnaître, et il est difficilement adaptable à des codes multiples.

Un autre type de récepteur, décrit par exemple dans le document FR—A—2.269.261 consiste à effectuer une translation en fréquence du signal reçu et à détecter un signal basse fréquence.

Ce principe est retenu dans la présente invention, où la translation effectuée est égale à la fréquence à détecter. Un filtre passe-bas permet de déterminer l'amplitude de la composante continue du signal modulé.

En effet, pour un signal reçu X(t) quelconque, un filtrage pass-bas portant sur le signal complexe

$$X'(t)=X(t)e^{jwt}$$

fournit un signal dont l'amplitude est proportionnelle à l'énergie contenue dans le spectre de X(t) au voisinage de la fréquence correspondant à la pulsation.

En pratique on utilise 2 circuits de modulation et de filtrage en parallèle réalisant:

— La multiplication par CosWt et le filtrage passe-bas,
— La multiplication par SinWt et le filtrage pass-bas,

et on effectue la moyenne quadratique des 2 réponses.

Le document FR—A—2.374.808 décrit un récepteur de ce type prévoyant toutefois plusieurs paires de circuits de modulation et de filtrage pour un traitement simultané pour toutes les combinaisons de fréquences d'un code donné.

Le document Commutation et Electronique, n° 59, Octobre 1977, Paris (FR), H. Campagno et al, "Système E 10. L'équipement de tonalités et auxiliaires" montre un récepteur basé sur une équation aux différences et un traitement global des énergies requis dans la présente demande, il comporte toutefois un filtre par fréquence et s'adapte donc mal un traitement de codes multifréquences différents.

Le but de l'invention est de réaliser sous un faible volume un récepteur piloté par un processeur et capable de prendre en compte un grand nombre de codes multifréquences.

Le récepteur numérique selon l'invention est relié à un processeur pour la reconnaissance de signaux de codes multifréquences qui proviennent de voies temporelles de signalisation, sous forme d'échantillons numériques, via les voies temporelles d'au moins une liaison multiplexe temporelle, il est doté d'une base de temps synchronisée avec la liaison multiplexe pour fournir des signaux de phase au récepteur pour chaque voie temporelle de cette liaison multiplexe, de moyens de modulation du signal, reçu par chaque voie temporelle de liaison, par les composantes sinus et cosinus de chaque fréquence de code utilisé qui sont fournies par un générateur numérique, de moyens de filtrage passe-bas des signaux modulés, de moyens d'analyse de l'énergie contenue, au voisinage des fréquences du code utilisé, dans le spectre des signaux dûment modulés et filtrés pour permettre l'identification des fréquences correspondant aux énergies les plus fortes, il est caractérisé en ce que les moyens d'analyse, programmables par le processeur comportent des moyens de mémorisation de constantes correspondant aux spécifications des codes utilisés, ces moyens de mémorisation étant adressés par une mémoire chargée par le processeur pour affecter à chaque voie un code de signalisation, et un dispositif de test des énergies les plus fortes par comparaison auxdites constantes.

Un mode d'application préférentiel de l'invention décrit ci-après à titre d'exemple permettra de bien en faire comprendre les caractéristiques, en relation avec les dessins annexés:

— La figure 1 est un schéma d'ensemble de l'invention et du processeur associé.
— La figure 2 montre le diagramme de temps des principaux signaux d'horloge utilisés.
— La figure 3 représente un circuit de modulation comportant un générateur numérique.
— La figure 4 représente un shéma du filtre numérique passe-bas utilisé.
— La figure 5 montre un circuit réalisant la moyenne quadratique de 2 signaux et le classement des résultats obtenus pout les différentes fréquences d'un même code.
— La figure 6 est un circuit de décision programmé en fonction des spécifications des différents codes pris en compte.

Le récepteur que l'on va décrire est applicable à un central téléphonique piloté par des calculateurs centraux ou par des organes de commande répartie, par exemple des microprocesseurs.

Le gestion des échanges d'informations entre organes de commande et auxiliaires de signalisation multifréquence est faite par un microprocesseur qui pourra gérer par exemple un émetteur et un récepteur. Dans cette application le microprocesseur effectue les tâches suivantes concernant le récepteur:

— Affectation des vois et des codes sur ordres de la commande du central.
— Confirmation des signaux détectés et préconfirmés par le récepteur.
— Prétraitement: reconnaissance des signaux du code par exemple des chiffres de numérotation.
— Essais: systématiques ou sur ordre de la commande.

Le récepteur, piloté par le microprocesseur mP (figure 1) comporte les éléments suivants:

— Un circuit de modulation MO relié à une liaison MIC et comportant un générateur de fréquence programmable. La liaison MIC est de type européen: 32 voies de 8 eb échantillonnées à une fréquence de 8 KHz, et transportant des signaux compressés suivant la loi A définie par le CCITT (avis G. 711). Le générateur qui sera décrit plus loin est du type de celui qui est décrit dans le brevet français n° 8003572 et il fournit pour chaque voie et chaque fréquence des codes utilisés les deux signaux CosWt et SinWt.
— Un ensemble de circuits F1 à F4 réalisant des filtres passe-bas FPB.
— Un circuit CL réalisant pour chaque fréquence la moyenne quadratique des 2 composantes, le classement des valeurs obtenues pour toutes les fréquences d'un code en ne retenant que les 3 valeurs les plus fortes.
— Un circuit de décision DE qui analyse les changements d'état et en effectue une préconfirmation avant de les communiquer au microprocesseur, ce qui allège la tâche de ce dernier.
— Une base de temps BT qui crée, à partir des signaux de signalisation reçus sur la liaison MIC, les signaux nécessaires au fonctionnement des cartes du récepteur.

Les structure des filtres passe-bas utilisés est basée sur la théorie des équations aux différences. Une équation simple pour une cellule de filtre s'écrit

$$Y[(n+1)T]=X[nT]+CY[nT]$$

où X est le signal d'entrée de la cellule

Y est le signal de sortie
T la période d'échantillonnage
$C=1-2\pi FcT$
Fc=fréquence de coupure à 3dB.

Le gain de la cellule est $1/2\pi$ Fct.
Dans cette application on posera $2\pi FcT=2^{-n}$ on obtient, avec T=125 µs les cas particuliers suivants:

| | | |
|---|---|---|
| n=5 Fc | 40 Hz | |
| n=6 FC | 20 Hz | (à moins de 1% près) |
| n=7 FC | 10 Hz | |

Pour les valeurs entières de n la réalisation de la cellule ne nécessite donc que les opérations logiques simples: décalage, addition, soustraction.

D'autre part on peut, également par décalage, se ramener à des cellules de gain unitaire puisque le gain a dans ce cas pour valeur $2^n$.

Le filtre décrit plus loin, représenté figure 4, comporte 4 cellules de ce type en série, dans le but d'avoir un bon compromis entre sélectivité, temps de réponse et volume de matériel.

Ces cellules réalisant les opérations suivantes sur le signal d'entrée X(nT) pour aboutir au signal de sortie YS:

$$Y1[(n+1)T]=X(nT)+Y1(nT)[1-2^{-n1}]$$
$$Y2[(n+1)T]=2^{-n1}Y1[(n+1)T]+Y2(nT)[1-2^{-n2}]$$
$$Y3[(n+1)T]=2^{-n2}Y2[(n+1)T]+Y3(nT)[1-2^{n3}]$$
$$Y4[(n+1)T]=4^{-n3}Y3[(n+1)T]+Y4(nT)[1-2^{n4}]$$
$$Y_s=2^{-n4}Y4[(n+1)T]$$

En pratique on obtient un bon résultat pour n1=n2=n3=5 et n4=6, mais la structure de la cellule utilisée permet de commander les valeurs de n1 à n4 en fonction du code analysé.

On va maintenant décrire en détail le récepteur. Le circuit de modulation MO, comportant le générateur de fréquence de type décrit dans le brevet n° 8003572 est représenté figure 3. Ce circuit comporte également des moyens permettant le test par le microprocesseur.

La liaison d'entrée MIC est reliée à un registre à décalage de 8 eb, RD1, par un multiplexeur MX1 dont l'autre entrée ET provient du microprocesseur et sert au test.

Pour chaque voie de la liaison MIC, le registre RD1 permet d'enregistrer l'échantillon de signal multifréquences de 8 eb w1 à w8.

La procédure générale est la suivante: chaque code peut comporter jusqu'à 8 fréquences, et pour chaque voie on utilise les 8 temps élémentaires, correspondant à la période d'arrivée des eb sur le MIC, pour faire les opérations correspondant à ces 8 fréquences: modulation (composantes sinus et cosinus), filtrage, analyse des énergies.

La base de temps fournit les signaux suivants (figure 2)

— Chaque temps élémentaire w1 à w8 de 488 ns est divisé en 4 périodes ha, hb, hc, hd de 122 ns.
— Un signal A, à l'état 1 depuis le front montant de ha jusqu'au font montant de hc, est utilisé pour le traitement successif des composantes sinus, et cosines, et d'autres opérations en temps partagé.
— Un signal Wr permet la synchronisation du récepteur en fin de trame.

Ce signal apparait en w8×hc de la voie 31 et dure 1 temps élémentaire (488 ns).

La synchronisation du circuit de modulation est réalisée par un compteur CR1 de 8 eb piloté par le signal ha: 5 eb indiquent le numéro de voie NV et 3 eb l'instant élémentaire (W1 à W8). Le compteur est initialisé à chaque trame à une valeur adéquate K chargée par une porte PO à l'instant Wr×hb.

Le numéro de code CO affecté à chaque voie est stocké dans une mémoire MC1 de 32 mots de 6 eb (possibilité d'avoir 64 codes). La mémoire MC1 est chargée par le microprocesseur par un registre à décalage RD2 et une porte P1.

Les liaisons du circuit de modulation avec le processeur sont les suivantes:

— Chargement des numéros de code: liaison série EK reliée à l'entrée du registre RD2, et fil de commande AK autorisant le pilotage du registre (porte P2) par l'horloge hc.
— Lecture de la mémoire: liaison série SK en sortie d'un registre à décalage RD3 relié à la sortie de MC1 par une porte P3, contrôlée par le signal hb et par la sortie d'une porte P4 qui autorise la lecture. La porte P4 est validée d'une part lorsqu'un eb E du registre RD2 qui indique un ordre d'écriture est à zéro (inverseur I1), et d'autre part par une bascule B1 pilotée par le signal AK à travers un inverseur I2 et remise à zéro par le signal hc. L'émission sur la liaison SK est pilotée par le signal ha (porte P5, signal d'autorisation VK).
— Test de simulation: liaison série ET. Le multiplexeur MX1 est adressé par un signal At du processeur. La sortie du registre RD1 est reliée à la sortie série ST par une bascule B2 pilotée par le signal ha.

Le chargement de registre RD1 est commandé par le signal hc à travers une porte P6 contrôlée par une porte "OU" P7. La porte P7 est validée par un signal VT, ou par l'état zéro du signal AT (inverseur I3).

Des moyens de contrôle et de test analogues sont utilisés dans les autres circuits du récepteur, et on ne les décrira pas en détail.

La mémoire MC1 est adressée par le numéro de voie NV à travers un multiplexeur MX2 donnant accès par le registre RD2 ou par le compteur CR1. Le multiplexeur est adressé par le signal A délivré en sortie d'une porte P8 validée en sortie de l'inverseur I2. La porte P1 d'entrée de la mémoire est ouverte pour hb=1 et sous contrôle d'une porte P9 validée par l'eb E du registre RD2 et par la sortie Q de la bascule B1.

Le générateur comporte une table TSC en mémoire PROM contenant 1024 valeurs des fonctions sinus et cosinus sous forme logarithmique. L'eb de poids faible de l'adresse reçoit le signal A. A chaque pas du compteur CR1, la table fournit donc successivement les 2 composantes.

La fréquence des signaux émis est déterminée par le pas d'exploration stocké dans une mémoire M1 de 1024 mots (un mot par fréquence, pour chaque code). Le numéro d'identification de la fréquence NF est ici égal au numéro NW: Le contenu du compteur CR1 est stocké au temps hd (porte P10) dans un registre R1. L'information NF fournit une partie de l'adressage de la mémoire M1, complété par le numéro de code CO stocké dans un registre R2 en sortie de la mémoire MC1 (porte P11 validée au temps hd). L'adresse de la table est contenue dans une mémoire MA adressée par le registre R1, et cette adresse est stockée à chaque pas dans un registre R3 (porte P12, validée au temps ha). A chaque trame chaque mot de la mémoire MA est incrémenté par l'intermédiaire d'un additionneur AD1 et d'une porte P13 ouverte à chaque temps hb. Pour obtenir la précision voulue dans le choix des fréquences l'incrément est déterminé avec une partie entière de 10 eb et une partie fractionnaire de 6 eb, et seule la partie entière de l'adresse est transmise à la table TSC.

Pour effectuer la modulation du signal reçu sur les voies MIC, le contenu de registre RD1 est stocké à chaque changement de voie dans un registre R4 (porte P14 ouverte au temps w1×ha).

La modulation est effectuée par un additionneur AD2 relié à la sortie du registre R4 et de la table TSC. En effet, la loi A de compression sur les voies MIC est très proche d'une loi logarithmique, et il est connu (voir en particulier les brevets déjà cités) d'effectuer une amplification ou une modulation par addition de signaux compressés ou d'un signal compressé et d'un signal logarithmique.

Le signal est ensuite décompressé à l'aide d'une mémoire de conversion MCL, par exemple de type PROM de 512 mots de 12 eb (un mot par voie et par fréquence pour les 2 composantes). Les 9 eb

d'adressage sont fournis: en sortie de l'additionneur (7 eb), par une sortie C de l'additionneur indiquant une retenue, et en sortie d'un circuit de sélection (portes ou exclusif X1 et X2, multiplexeur MX3 adressé par le signal A) permettant de tenir compte du signe du signal, la table TSC ne comportant que les valeurs correspondant à l'intervalle 0 à π de la variable. En sortie de la mémoire MCL, la composante sinus est stockée dans un registre intermédiaire R5 au temps hc (porte P15). Au temps ha suivant les 2 composantes sont stockées dans les registres de sorties R6 et R7 (porte P16—P17).

Les filtres utilisés pour les 2 composantes sont indentiques. Les 4 circuits (F1 à F4) représentés figure 1 correspondent chacun à une carte de circuit imprimé. Chaque carte comporte 2 cellules CF1 et CF2 identiques (figure 4), un registre d'addressage R8 et un registre d'entrée R9 relié à l'entrée E du circuit par une porte P18 ouverte au temps hc.

Chaque cellule comporte une mémoire MY de 256 mots de 17 eb pour le stockage des variables intermédiaires Y (nt), avec un registre de sortie R11 contrôlé au temps hb par une porte P19. L'entrée de la mémoire MY est validée au temps hb par une porte P20. L'écriture en mémoire (entrée e) est légèrement retardée par rapport à la lecture par une circuit à retard RE qui contrôle également la porte P19 (inverseur I4). Les opérations sur la variable sont réalisées à l'aide des circuits complémentaires suivants:

— l'opération $Y_i$ (nt) $[1-2^{-n_i}]$ est réalisée par un additionneur AD4 opérant une addition en "complément à 2" (l'inverseur I5) des 17 eb du registre R11 et des 17 eb poids forts complétés à gauche par ni "0". Dans cette réalisation la valeur de ni peut être commandée par le processeur: le décalage est réalisé à travers un multiplexeur MX4 à k entrées permettant le choix entre k valeurs de ni par une commande d'adressage Y.
— L'addition du signal d'entrée de la cellule est réalisée par un additionneur AD3. Le résultat est stocké (porte P21) au temps ha suivant dans un registre R10 dont la sortie est reliée à la porte P20 et à la sortie ST de la cellule.
— L'affaiblissement du signal (décalage de ni-1 eb) pour obtenir des cellules de gain unité est réalisé soit par cablage si ni est fixe, soit à l'aide d'un multiplexeur ou d'un décaleur (non représenté sur la figure) si la valeur de ni est programmable.

La mémoire MY est adressée au fil de l'eau par le registre R8, sans référence au signal analysé.

Le circuit CL effectuant la moyenne quadratique des 2 composantes du signal modulé et le classement des réponses pour les 8 fréquences par ordre d'énergie décroissante est représenté figure 5.

Les composantes sont reçues au temps hc dans 2 registres d'entrée R12 et R13 (portes P22, P23). La sortie de chaque registre est utilisée pour l'adressage d'une mémoire morte (MP1, MP2) de 1024 mots de 5 eb rélisant la compression du signal. En sortie de ces mémoires, une méoire morte MQ réalise l'opération:

$$\mathrm{Log}\sqrt{a^2+b^2}$$

Le résultat est sorti au temps hb dans un registre R14. Le classement est effectué à l'aide de 3 comparateurs CP1 à CP3, de trois registres de classements R15, R16, R17 dont les entrées sont contrôlées par des portes P25, P26, P27 ouvertes au temps hd lorsque le contenu de registre R14 est supérieure à celui du registre contrôlé, et de 2 multiplexeurs intermédiaires MX5, MX6 pilotés par les 2 premiers comparateurs.

L'identification des fréquences est faite par un compteur binaire à 3 eb CR2 qui progresse au temps hd. Le compteur est initialisé à chaque changement de voie (temps W8×hd, porte P28) à une valeur (porte P29) qui tient compte du nombre d'instants wi écoulés depuis l'identification faite dans le circuit de modulation. L'identification n'est nécessaire que pour les 2 signaux dominants, dans le cas de code n'utilisant pas de combinaisons de plus de 2 fréquences. Le contenu du compteur CR2 est chargé dans la partie NF des registres R15 et R16 en même temps que l'énergie E.

Les registres R15 à R17 sont remis à zéro (entrée R) à chaque changement de voie, par décodage de la sortie 7 du compteur (décodeur DC1 inverseur I6, bascule B3, porte P30.

Enfin, au temps ha contrôlant des portes P31, P32, P33, le contenu des registres R15 à R17 est transféré dans des registres de sortie R18 à R20.

Le circuit de détection DE (figure 6) réalise, à partir des 3 énergies les plus élevées pour chaque voie, et à partir de spécifications propres à chaque code, une identification et une préconfirmation des signaux reçus.

D'une manière classique dans le cas d'un code bifréquence, les spécifications sont les suivantes:

$E1-E2 \leqslant K1$ (1)
$E2 \geqslant K2$ (2) K1 à K3 et TE étant propres à chaque code
$E2-E3 \geqslant K3$ (3)

Durée de préconfirmation $\geqslant$TE

Pour permettre une grande diversité d'utilisations, on réalise également dans cette application la comparaison de E1 à une constante K1, utilisée par exemple dans le cas où l'énergie doit être comprise dans une fourchette déterminée par K4 et K2

E1⩽K4 (4)

La synchronisation pour le circuit DE est réalisée par un compteur CR3, initialisé à une valeur K appropriée, à un instant I déterminé en fin de trame (porte P34). Le compteur fournit les informations NW et NV déjà définies. Les instants W1 à W8 obtenus en sortie d'un décodeur DC2 sont utilisés ici pour commander la succession des opérations à faire pour chaque voie, comme indiqué plus loin.

Un registre d'entrée RG reçoit à l'instant W8×hc les signaux de sortie S1, S2, S3 du circuit CL (porte P35).

Le test des conditions (1), (2), (3), (4) définies plus haut est réalisé en sortie du registre RG à l'aide d'un groupe de 2 multiplexeurs MX7, d'un soustracteur SR, d'un multiplexeur MX8 et d'un comparateur CP4. Les résultats de comparaisons sont stockés successivement dans un registre à décalage RD3 et dans une bascule B4. Les constantes K1 à K4 et TE de chaque code sont stockées dans une mémoire MK adressée par le numéro de code, contenu dans une mémoire MC2 chargée par le processeur et par le numéro NW. La mémoire MC2 est analogue à MC1 et lue et écrite dans les mêmes conditions (registre à décalage d'entrée RD4 portes P36, P37, P38, multiplexeur d'adressage MX9).

Le test des conditions est détaillé ci-dessous, compte tenu de la commande des multiplexeurs et du registre RD3:

— MX7: adressage par les eb 1 et 2 de NW (porte "OU" P39)
— MX8: adressage par les eb 0 et 2 de NW (porte "OU" P40),
— RD3: pilotage par hc quand l'eb 2 de NW est à l'état "0" (inverseur 17, porte P39),
— la bascule B4 est commandée en W5×hc (porte P4).

Séquence de test et de préconfirmation:

| NW | | Opérations effectuées |
|---|---|---|
| 000 | (W1) | ⟶Test. (1) résultat dans RD |
| 000 | (W2) | ⟶Test (2) résultat dans RD |
| 010 | (W3) | ⟶Test (3) résultat dans RD |
| 011 | (W4) | ⟶Test E1⩾K2 résultat dans RD |
| 100 | (W5) | ⟶Test (4) résultat dans B4 |
| W6–W7–W8 | | Préconfirmation, entrées/sorties |

La confirmation complète est une opération qui aboutit à une décision, au niveau des organes de commande du central télephonique, d'accepter comme bons ou de déclarer non valables les signaux détectés. Un système de confirmation est décrit en particulier dans le brevet francais n° 80—07074.

Dans la présente application la confirmation est préparée par le circuit DE et achevée par le microprocesseur mP, qui reçoit de ce circuit, pour tout signal préconfirmé, un mot d'état de 16 eb:

eb 0 à 4: NV (numéro de voie concernée)
eb 5: résultat du test (4) (bascule B4),
eb 6—7: code CP indiquant un état qui a déjà été confirmé,
eb 8—9: code CC correspondant à un signal en cours de confirmation,
eb 10—15: NF numéros de fréquences NF1 et NF2 lus dans le registre d'entrée RE.

La préconfirmation est réalisée par une logique comportant une mémoire morte de commande MM, une mémoire vive MS de mise à jour des codes CP, CC, et une mémoire vive MT de mise à jour des temporisations.

La mémoire MM délivre des microcommandes V, CH, T définies plus loin, et la nouvelle valeur des codes CP, CC. Elle est adressée par les informations qui définissant l'état de la voie en cours de traitement:

— 4 eb indiquant la valeur actuelle de CP et CC lus dans un registre R21 en sortie de la mémoire MS (Porte P41).
— 4 eb de sortie du registre RD3 (test de conditions).
— 2 eb en sortie d'un compteur de temporisation CR4 et d'une bascule B5 définis plus loin.

La mémoire MS reçoit les nouvelles valeurs CP, CC au temps W5×hc (porte P42).

Les informations de temporisation sont stockées dans la mémoire MT est mises à jour par un compteur/décompteur CR4 relié à la sortie de la mémoire (porte P43 commandée en W1 hc). Le compteur

est incrémenté à chaque traitement (entrée e1 commandée en W2×hc par une porte P44) et décrémenté sur ordre de la mémoire MM (entrée e2 recevant 1 eb de microcommande T, porte P45 validée en h2×W5.

La mémoire MT est adressée par le numéro de voie NV. L'accès à la mémoire est réalisé par un multiplexeur MX10 relié à la sortie du compteur CR4 et à la sortie de la mémoire MK.

La sortie du multiplexeur MX10 est reliée à l'entrée de la mémoire MT par une porte P46 ouverte en W6×hc. Le multiplexeur est adressé par un eb de la microcommande T.

On va maintenant décrire la procédure de préconfirmation, en détaillant en même temps les moyens d'échanges avec le microprocesseur mP.

Pendant le traitement d'une voie l'information NV permet la lecture des constantes K1 à K5, TE. En W1 les codes CP et CC sont chargés dans le registre R21. La temporisation TE chargée au cours d'une trame précédente (en W6) dans la mémoire MT, est chargée dans CR4 en W1×hc, puis incrémentée.

Les tests sont effectués en W1 à W5 et chargés dans RD3 et B4 comme indiqué précédemment.

En W5×hc sont délivrés les microcommandes à usage interne commande éventuelle T de décomptage, et chargement V des nouveaux codes CP, CC.

Lorsque la voie arrive en fin de période de préconfirmation (sortie C du compteur CR4 à l'état 7), la microcommande CH est utilisée pour appeler le microprocesseur par une procédure d'interruption (sortie IT de la bascule B5). Le signal CH est pris en compte en W6×hc (porte P47) par une bascule B6, puis la bascule B5 au temps W4×hc suivant (porte P48). La bascule B6 est remise à zéro par une commande RZ venant du microprocesseur (porte P49 ouverte en hc).

Les informations sont transmises au microprocesseur sur une liaison série S reliée à la sortie d'un registre à décalage RD5 par l'intermédiaire d'une bascule B7 pilotée par le si jnal ha.

Les informations sont transmises au microprocesseur sur une liaison série S reliée à la sortie d'un registre à décalage RD5 par l'intermédiaire d'une bascule B7 pilotée par le signal ha.

Les informations transmises sont les suivantes (16 eb):

— Numéro de voie NV (5 eb),
— numéro de fréquences NF (6 eb) provenant du registre RG,
— sortie de la bascule B4,
— code CC en sortie de R21 (2 eb),
— code CP en sortie de MM (2 eb).

Le registre RD5 est chargé par une porte P50 contrôlée par les signaux CH, W6, hc (porte P51). L'émission sur la liaison S est pilotée par le signal hc (porte P52 validée par une autorisation VS du microprocesseur), et relayée par le signal ha (bascule B7).

Comme le montre l'application décrite, le récepteur suivant l'invention n'utilise que des circuits très courants, et il est adaptable à des applications très diverses, et simultanément à un grand nombre de codes, de spécifications et de procédures de confirmation, toutes ces variables pouvant être introduites dans des mémoires vives ou mortes.

**Revendications**

1. Récepteur numérique de fréquences relié à un processeur (mP) pour la reconnaissance de signaux de codes multifréquences qui proviennent de voies temporelles de signalisation, sous forme d'échantillons numériques, via les voies temporelles d'au moins une liaison multiplexe temporelle (MIC), ledit récepteur numérique étant doté d'une base de temps (BT) sychronisée avec la liaison multiplexe pour fournir des signaux de phase (ba à bd, A) au récepteur pour chaque voie temporelle de cette liaison multiplexe, de moyens de modulation (MO) du signal, reçu à travers chaque voie temporelle de liaison, par les composantes sinus et cosinus de chaque fréquence du code utilisé qui sont fournies par un générateur numérique, de moyens de filtrage passe-bas (FPB) des signaux modulés, de moyens d'analyse (CL, DE) de l'énergie contenue, au voisinage des fréquences du code utilisé, dans le spectre des signaux dûment modulés et filtrés pour permettre l'identification des fréquences correspondant aux énergies les plus fortes, caractérisé en ce que les moyens d'analyse, programmables par le processeur (mP), comportent des moyens de mémorisation (MK) de constantes (K1 à K5, TW) correspondants aux spécifications des codes utilisés, ces moyens de mémorisation étant adressés par une mémoire (MC2) chargée par le processeur (mP) pour affecter à chaque voie un code de signalisation, et un dispositif de test (MX7, SR, MX8, CP4, ED3) des énergies les plus fortes (E1 à E3) par comparaison auxdites constantes.

2. Récepteur numérique selon la revendication 1, caractérisé en ce qu'il comporte un dispositif de préconfirmation (MM, MS, MT) programmé, la préconfirmation consistant en une analyse répétée sur plusieurs trames, des informations d'état (CP, CC) relatives à l'état de la voie au cours de trames précédentes, et à l'appel du processeur par une procédure d'interruption en fin de préconfirmation déterminé par un temporisation.

3. Récepteur suivant la revendication 2, caractérisé par le fait que le dispositif de préconfirmation comporte un mémoire de commande (MM) adressée par lesdites informations provenant du dispositif de test et par les informations d'état (CP, CC), un circuit de mise à jour des informations d'état (MS, R21), un circuit de mise à jour des temporisations (MT, CR1), et un circuit d'échange d'informations avec le processeur (B5, B6, B7, RD5).

**Patentansprüche**

1. Digitaler Frequenzempfänger, der an einen Prozessor (mP) für die Erkennung von Vielfrequenz-Kodesignalen angeschlossen ist, die von Signalisier-Zeitkanälen stammen und in Form von digitalen Tastproben über die Zeitkanäle mindestens einer Zeitmultiplexverbindung (MIC) ankommen, wobei der digitale Empfänger eine Zeitbasis (BT), die mit der Multiplexverbindung synchronisiert ist und Phasensignale (ba bis bd, A) an den Empfänger für jeden Zeitkanal dieser Multiplexverbindung liefert, Mittel (MO) zur Modulation des über jeden Zeitkanal der Verbindung empfangenen Signals mit der Sinus- und der Kosinus-komponente jeder Frequenz des verwendeten Kodes, die von einem digitalen Generator Signale und Analysemittel (CL, DE) für die in der Nähe der Frequenzen des verwendeten Kodes im Spektrum der sauber modulierten und gefilterten Signale vorhandene Energie besitzt, um die Frequenzen identifizieren zu können, die den höchsten Energieanteilen entsprechen, dadurch gekennzeichnet, daß die Analysemittel, die vom Prozessor (mP) programmiert werden können, Mittel (MK) zum Speichern von den Spezifikationen der verwendeten Kodes entsprechenden Konstanten (K1 bis K5, TE) enthalten, die von einem durch den Prozessor (mP) geladenen Speicher (MC2) adressiert werden, um jedem Kanal einen Signalisierkode zuzuteilen, sowie eine Vorrichtung (MX7, SR, MX8, CP4, ED3) zum Testen der größten Energieanteile (E1 bis E3) durch Vergleich mit diesen Konstanten.

2. Digitaler Empfänger nach Anspruch 1, dadurch gekennzeichnet, daß er eine programmierte Vorbestätigungsvorrichtung (MM, MS; MT) aufweist, wobei die Vorbestätigung aus einer wiederholten Analyse von Zustandsinformationen (CP, CC) über mehrere Rahmen bezüglich der Prozessoranforderung durch eine Unterbrechungsprozedur am Vorbestätigungsende, das durch ein Zeitglied bestimmt wird, besteht.

3. Empfänger nach Anspruch 2, dadurch gekennzeichnet, daß die Vorbestätigungsvorrichtung einen Steuerspeicher (MM), der durch die von der Testvorrichtung kommenden Informationen und durch die Zustandsinformationen (CP, CC) gesteuert wird, eine Schaltung zur Aktualisierung der Zustandsinformationen (MS, R21), eine Schaltung zur Aktualisierung der Zeitverzögerungen (MT, CR1) und einen Schaltkreis zum Austausch von Informationen mit dem Prozessor (B5, B6, B7, RD5) enthält.

**Claims**

1. A digital frequency receiver connected to a processor (mP) for the recognition of multifrequency code signals coming in sampled digital form from signalling time channels and transmitted through the time channels of at least one PCM time multiplex link (MIC), said digital receiver including a time base (BT) synchronized with the multiplex link to supply the receiver for each time channel of said multiplex link with phase signals (ba to bd, A) means (MO) for modulating the signal received on each time channel of the link by the sine and cosine components of each one of the frequencies of the code used and which are supplied by a digital generator, means (FPB) for low-pass filtering of the modulated signals, and means (CL, DE) for analyzing the energy contained in the spectrum of the modulated and filtered signals in the neighbourhood of the frequencies of the code used, in order to allow the identification of the frequencies corresponding to the highest energy levels, characterized in that the analyzing means, which can be programmed by the processor (mP) include means (MK) for memorizing constant values (K1 to K5, TE) corresponding to the specifications of the codes used, these memorization means being addressed by a memory (MC2) charged by the processor (mP) in order to assign to each channel one signalling code, and including a testing device (MX7, SR, MX8, CP4, ED3) for testing the highest energy levels (E1 to E3) through a comparison with said constant values.

2. A digital receiver according to claim 1, characterised in that it comprises a programmed preconfirmation device (MM, MS, MT), the preconfirmation consisting in a repeated analysis on several frames, status informations (CP, CC) relating to the status of the channel during the preceding frames and relating to the call of the processor through an interrupt procedure at the end of the preconfirmation which is determined by a delay.

3. A receiver according to claim 2, characterized in that the preconfirmation device comprises a control memory (MM) addressed by said informations delivered by the testing device and by the status informations (CP, CC), a circuit for updating the status informations (MS, R21), a circuit for updating the delays (MT, CR1) and a circuit for the information exchange with the processor (B5, B6, B7, RD5).

FIG.1

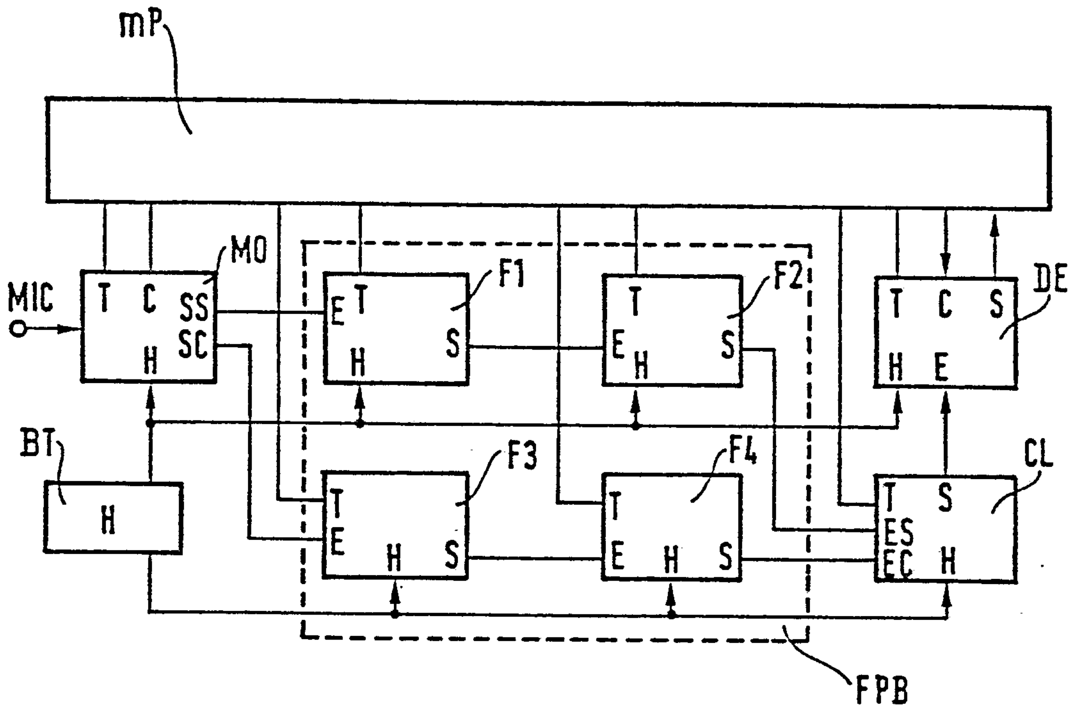
mP
MO
MIC
T C SS SC H
E T H S
F1
F2
T E H S
DE
T C S H E
BT
H
F3
F4
T E H S
CL
T S ES EC H
FPB

FIG.2

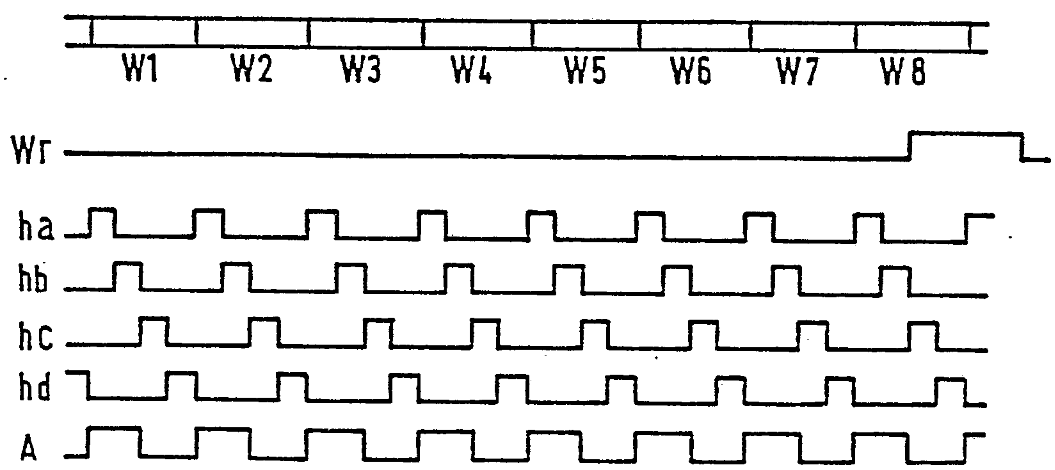
W1 W2 W3 W4 W5 W6 W7 W8
Wr
ha
hb
hc
hd
A

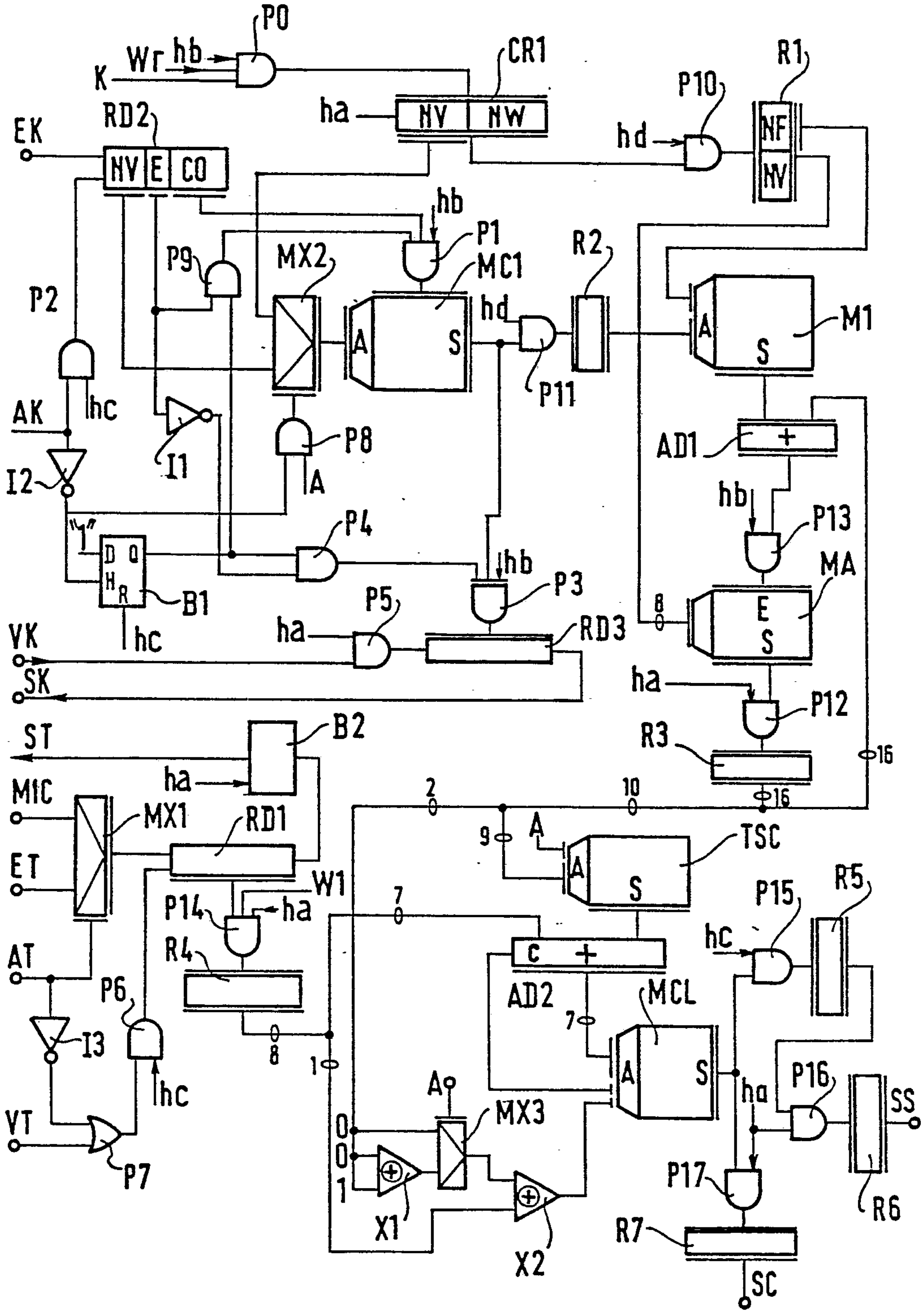
P0
Wr
hb
K
CR1
ha
NV
NW
R1
P10
hd
NF
NV
EK
RD2
NV
E
CO
hb
P1
P9
MX2
MC1
R2
P2
A
S
hd
A
S
M1
P11
AK
hc
I1
P8
AD1
+
I2
A
hb
P13
"1"
D
Q
H
R
P4
MA
B1
hb
P3
E
S
hc
P5
ha
RD3
VK
SK
ha
P12
ST
B2
R3
ha
16
MIC
MX1
RD1
2
10
16
ET
9
A
TSC
A
S
W1
P14
ha
7
P15
R5
R4
hc
AT
c
+
AD2
P6
7
MCL
I3
8
1
A
S
ha
P16
hc
SS
A
MX3
VT
0
0
1
P17
P7
X1
X2
R6
R7
SC
FIG.3

FIG.4

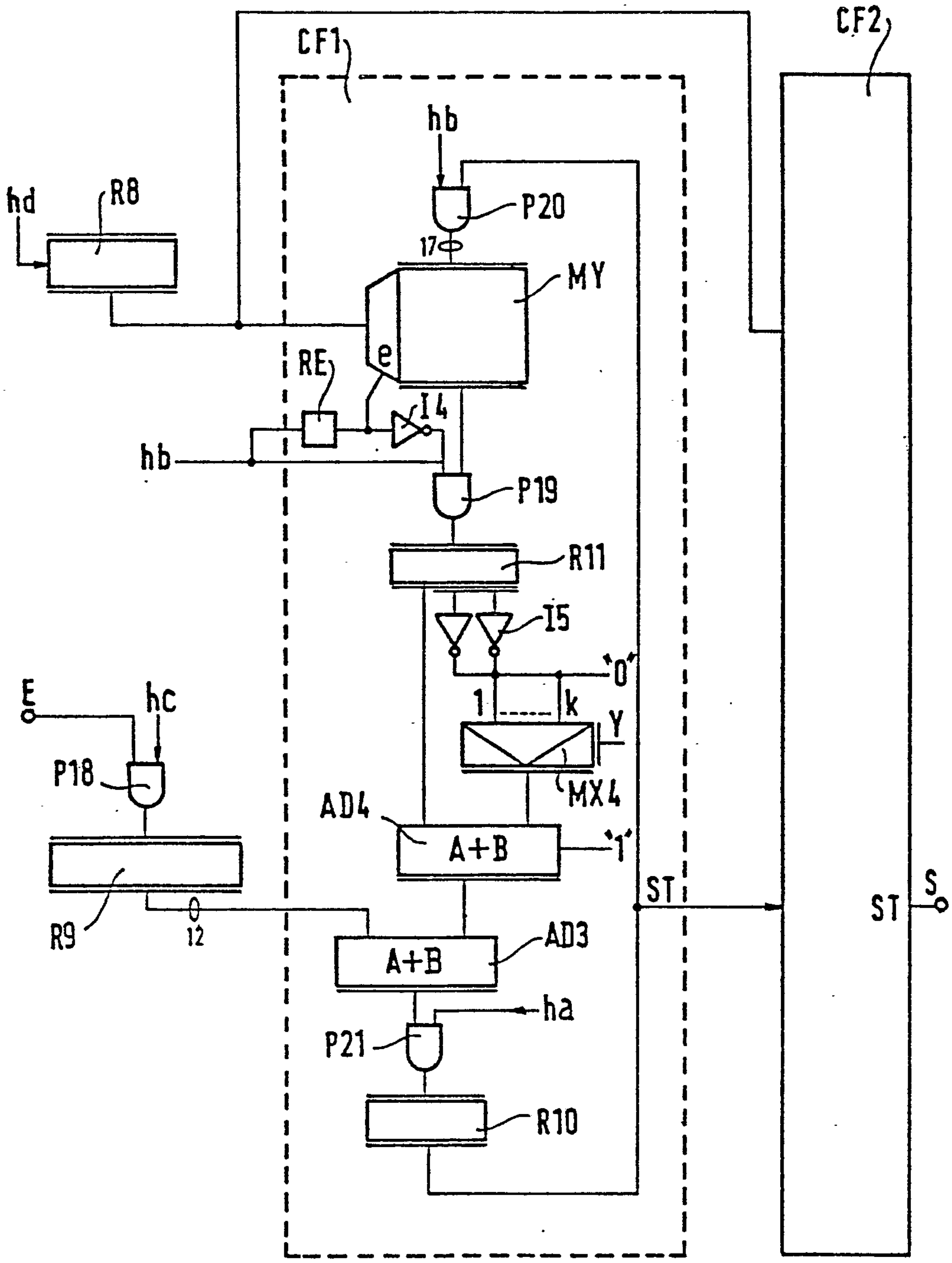
CF1
CF2
hb
P20
17
MY
hd
R8
RE
e
I4
hb
P19
R11
I5
"0"
1
k
Y
MX4
E
hc
P18
AD4
A+B
"1"
ST
ST
S
R9
0
12
A+B
AD3
ha
P21
R10

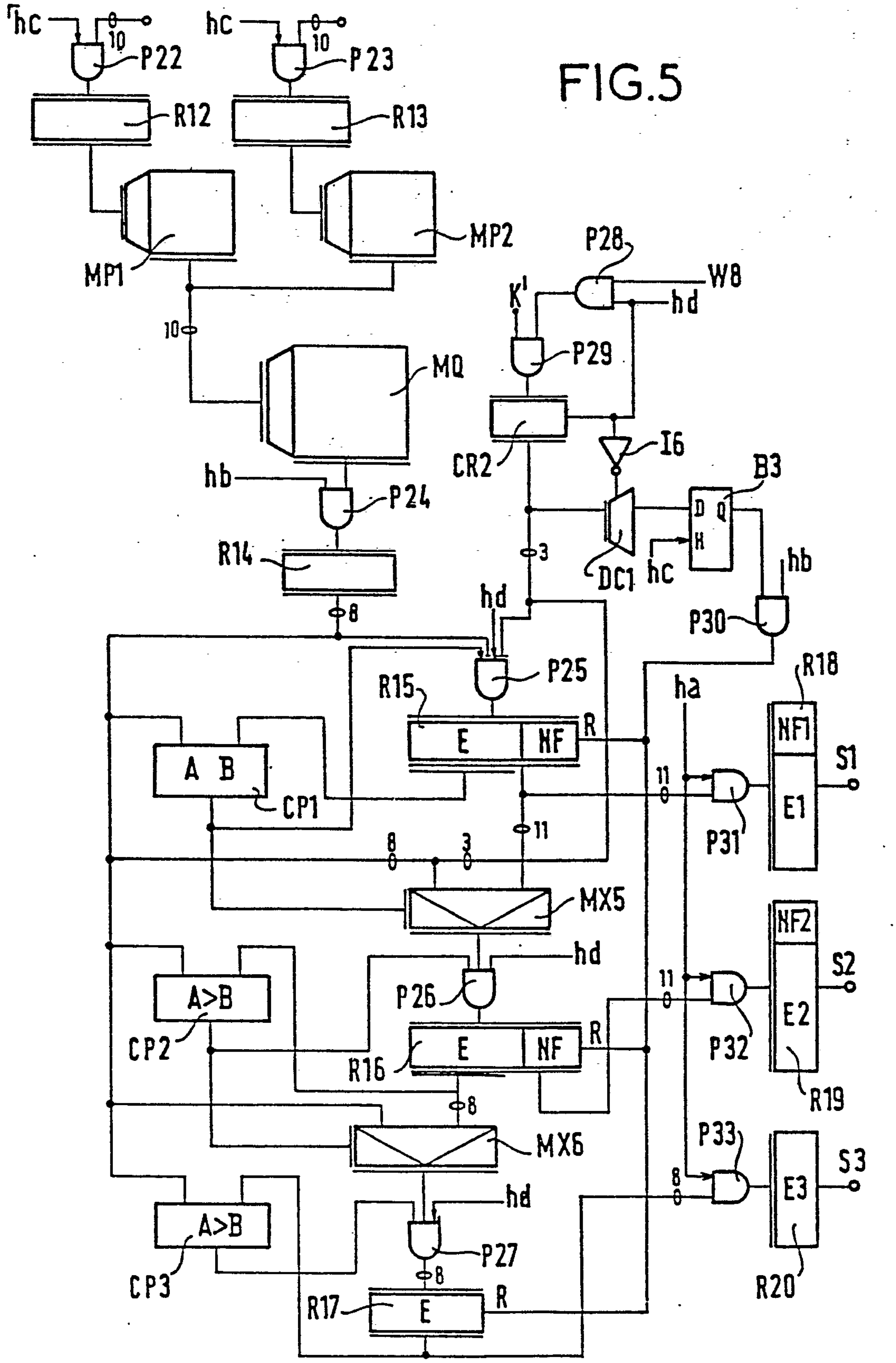
hc
10
P22
R12
hc
10
P23
R13
MP1
MP2
P28
W8
K'
hd
10
MQ
P29
CR2
I6
B3
D
Q
H
hb
P24
R14
8
3
DC1
hc
hb
hd
P30
P25
R15
E
NF
R
R18
ha
NF1
A B
CP1
11
0
S1
E1
P31
8
0
3
0
11
MX5
hd
NF2
A>B
CP2
P26
R16
E
NF
R
11
0
S2
E2
P32
R19
8
MX6
P33
8
0
S3
E3
A>B
CP3
hd
P27
8
R17
E
R
R20

FIG.5

FIG.6

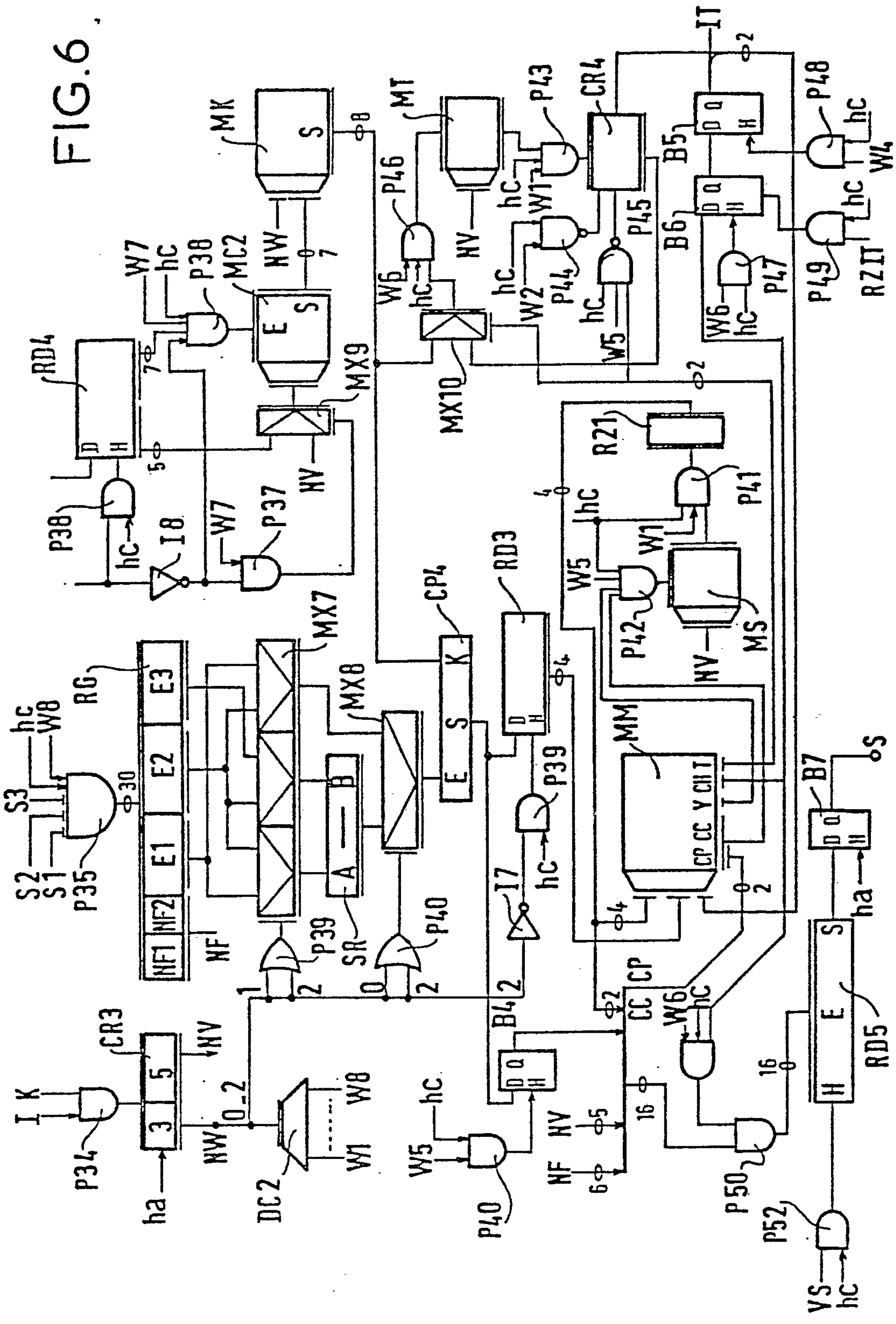

MK
MT
MC2
CR4
CR3
RD4
RD3
RD5
MX7
MX8
MX9
MX10
CP4
RG
NF1
NF2
E1
E2
E3
SR
MM
MS
R21
DC2
B4
B5
B6
B7
P34
P35
P37
P38
P39
P40
P41
P42
P43
P44
P45
P46
P47
P48
P49
P50
P52
I7
I8
IT
RZIT
VS
NW
NV
NF
W1
W2
W4
W5
W6
W7
W8
S1
S2
S3
hc
ha